Europäisches Patentamt

European Patent Office

Office européen des brevets

(19)

(11) **EP 0 529 421 B1**

(12) **EUROPÄISCHE PATENTSCHRIFT**

(45) Veröffentlichungstag und Bekanntmachung des Hinweises auf die Patenterteilung:
**21.10.1998 Patentblatt 1998/43**

(51) Int Cl.6: **H04L 5/06**

(21) Anmeldenummer: **92113788.1**

(22) Anmeldetag: **13.08.1992**

(54) **Verfahren und Anordnung zur Synchronisation eines Empfängers in einem Mehrkanalübertragungssystem auf den Sender des Systems**

Method and apparatus for synchronising a receiver in a multichannel communications system with the transmitter of said system

Procédé et dispositif pour synchroniser un récepteur, dans un système de communication à plusieurs canaux, avec l'émetteur dudit système

(84) Benannte Vertragsstaaten:
**AT BE CH DE DK ES FR GB GR IE IT LI LU MC NL PT SE**

(30) Priorität: **29.08.1991 DE 4128713**

(43) Veröffentlichungstag der Anmeldung:
**03.03.1993 Patentblatt 1993/09**

(73) Patentinhaber: **TELEFUNKEN Sendertechnik GmbH**
**10553 Berlin (DE)**

(72) Erfinder: **Müller, Andreas, Dipl.-Ing.**
**W-7916 Nersingen (DE)**

(74) Vertreter: **Fröhling, Werner, Dr. et al**
**Daimler-Benz Aerospace AG**
**Patentabteilung**
**Wörthstrasse 85**
**89077 Ulm (DE)**

(56) Entgegenhaltungen:
DE-A- 4 021 641     FR-A- 2 337 465
US-A- 4 152 649

• **IBM JOURNAL OF RESEARCH AND DEVELOPMENT Bd. 27, Nr. 5, September 1983, NEW YORK**
• **US Seiten 426 - 431 A. MILEWSKI: 'Periodic Sequences with Optimal Properties for Channel Estimation and Fast Start-Up Equalization.'**

• **Coding Theory and Applications. 2nd International Colloquium Proceedings, 24.-26.11.1986, Cachan-Paris, FR, Seiten 159-172, Springer-Verlag, Berlin, DE; R. ALEXIS: 'Search for Sequences with Zero Autocorrelation.'**
• **IEEE TRANSACTIONS ON AEROSPACE AND ELECTRONIC SYSTEMS Bd. 27, Nr. 1, Januar 1991, NEW YORK US Seiten 92 - 101 F. E. KRETSCHMER / K. GERLACH: 'Low Sidelobe Radar Waveforms Derived From Orthogonal Matrices.'**
• **1990 IEEE MILITARY COMMUNICATIONS CONFERENCE MILCOM '90, Monterey, CA, 30.09.-03.10.1990, vol. 1, pages 273-277, IEEE, New York, US; P. H. MOOSE: 'Differential Modulation and Demodulation of Multi-Frequency Digital Communications Signal.'**
• **IEEE COMMUNICATIONS MAGAZINE Bd. 28, Nr. 5, Mai 1990, PISCATAWAY, NJ US J. A. C. BINGHAM: 'Multicarrier Modulation for Data Transmission: An Idea Whose Time Has Come.' pages 5-8 and 11-14**
• **IEEE TRANSACTIONS ON COMMUNICATIONS, vol. COM-29, No. 7, Juli 1981, Seiten 982-988, Hirosaki**
• **IEEE TRANSACTIONS ON INFORMATION THEORY, vol. IT-18, Juli 1972, Seiten 531-532, Chu**
• **IRE TRANSACTIONS ON INFORMATION THEORY, vol. IT-7, Oktober 1961, Seiten 254-257, Heimiller**

**Beschreibung**

Die Erfindung betrifft ein Verfahren zur Erzeugung eines mehrere Symbolblöcke enthaltenden Sendesignals für ein Mehrkanalübertragungssystem gemäß Oberbegriff des Patentanspruchs 1 und ein Verfahren zur Synchronisation eines Empfängers eines Mehrkanalübertragungssystems auf den Sender des Systems gemäß Oberbegriff des Patentanspruchs 8 sowie Empfänger eines solchen Mehrkanalübertragungssystems gemäß Oberbegriff des Patentanspruchs 20. Verfahren bzw. Empfänger dieser Art sind bereits bekannt aus dem Artikel von B. Le Floch, et al. "Digital Sound Broadcasting to Mobile Receivers"; in: IEEE Transactions on Consumer Electronics, Vol. 35, No. 3, Aug. 1989, Seiten 493 bis 503.

Die Erfindung findet Verwendung beim für den digitalen Rundfunk vorgeschlagenen COFDM (Coded Orthogonal Frequency Division Multiplexing) Übertragungssystem (vgl. hierzu: den eingangs genannten Artikel von Le Floch, et al. bzw. den Artikel von C. Dosch "Erste Erfahrungen über den Empfang digitaler Tonsignale für Mobilempfang - Bericht über eine terrestrische Ausstrahlung zur Simulation einer Rundfunksatellitenübertragung anläßlich der WARC-ORB (88)"; in: Rundfunktechnische Mitteilungen, Jahrg. 33, 1989, H. 1, Seiten 8 bis 12 bzw. den Artikel von C.P. Pfaffinger "DAB - Digitaler terrestrischer Hörrundfunk - erste Versuchsaussendungen in München"; in: Rundfunktechnische Mitteilungen, Jahrg. 34, 1990, H. 3, Seiten 131 - 134 bzw. den Artikel "Nachfolge für den UKW-Hörfunk"; in: Funkschau-Spezial, H. 8, 1990, Seiten 9 - 13).

COFDM ist ein digitales Mehrkanal-Modulationsverfahren (vgl. hierzu: den eingangs genannten Artikel von Le Floch, et al. bzw. den Artikel von B. Hirosaki "An Orthogonally Multiplexed QAM System Using the Discrete Fourier Transform"; in: IEEE Transactions on Communications, Vol. COM-29, No. 7, Juli 1981, Seiten 982 bis 989). Bei einem solchen Verfahren wird das zu übertragende Datensignal auf eine Anzahl N (z.B. mehrere 100) Subkanäle aufgeteilt, die im Frequenzbereich nebeneinander liegen, wobei die Spektren sich auch überlappen dürfen. Durch diese Aufteilung beträgt die in jedem Subkanal übertragene Datenrate nur einen Bruchteil der ursprünglichen. Im gleichen Verhältnis verlängert sich die Symboldauer, was sich vorteilhaft auswirkt, wenn auf dem Übertragungsweg Echos auftreten. Durch Wahl eines genügend großen N kann stets erreicht werden, daß die Symboldauer groß gegen die maximale Echolaufzeit ist. Damit wird die durch Echos verursachte Symbol interferenz soweit reduziert, daß das Signal ohne Entzerrung demoduliert werden kann.

Das COFDM-Sendesignal s(t) läßt sich im Basisband als Superposition zeit- und frequenzverschobener Basisimpulse b(t) darstellen:

$$s(t) = \sum_i \sum_k s_{i,k} b(t - iT_s) e^{j2\pi kF_s(t - iT_s)}$$

$$(1)$$

Hierbei ist der Basisimpuls durch

$$b(t) = \begin{cases} 1 & \text{für} \ -t_g < t < t_s \\ 0 & \text{sonst} \end{cases}$$

$$(2)$$

gegeben. $j = \sqrt{-1}$ ist die imaginäre Einheit.

Der Summationsindex i repräsentiert den Symboltakt, der Index k den Subkanal. Folgende Parameter beschreiben das COFDM- Modulationsverfahren:

$T_s$: Symboldauer
$t_s$: genutzte Symboldauer
$t_g$: Schutzzeit
$F_s$: Subkanalabstand

Sie hängen über die Beziehungen $T_s = t_s + t_g$ und $F_s = 1/t_s$ zusammen. Als weitere Kenngröße kann der Nutzanteil, der Quotient aus genutzter Symboldauer und Symboldauer, $\gamma = t_s/T_s$ definiert werden. Bei den derzeit für den Einsatz im digitalen Rundfunk diskutierten Varianten von COFDM ist stets $\gamma = 0.8$. Unter Berücksichtigung dieser Beziehungen besitzt das COFDM-System nur noch einen freien Parameter, aus dem sich die restlichen ableiten lassen.

Die zu übertragende Information ist in komplexen Symbolen $d_{i,k}$ kodiert. Bei COFDM wird 4-Phasen-Umtastung als Modulationsverfahren verwendet, es gilt daher $d_{i,k} \in \{1, j, -1, -j\}$. Damit die Übertragung unempfindlich gegen kanalbedingte Phasendrehungen ist, werden nicht die $d_{i,k}$, sondern die durch die differentielle Kodierung $s_{i,k} = s_{i-1,k} \cdot d_{i,k}$ erzeugten Sendesymbole $s_{i,k}$ ausgesendet. Mitunter ist es praktisch, die im gleichen Zeitschlitz i übertragenen Sendesymbole aller Subkanäle zu einem N-dimensionalen Vektor $\vec{s}_i$ zusammenzufassen. Ein solcher Vektor wird Symbolblock genannt.

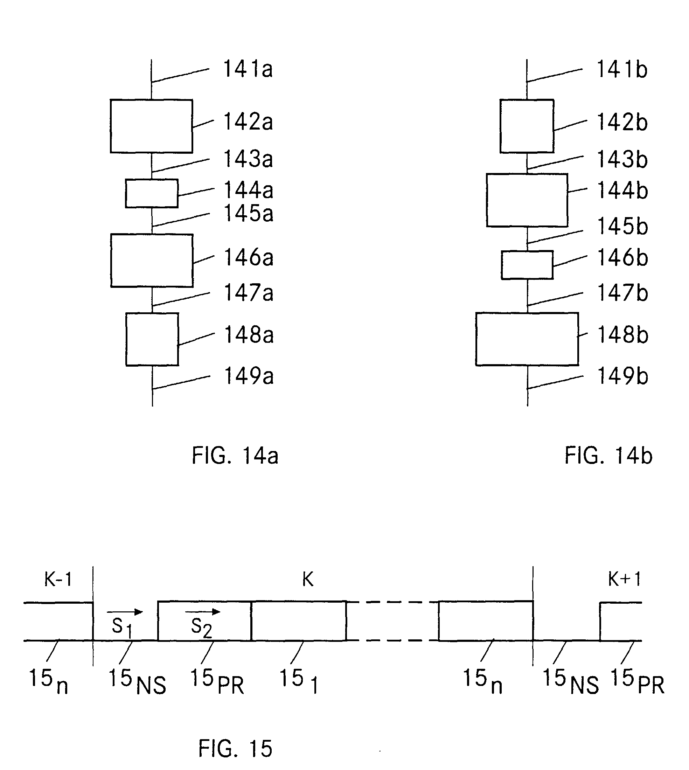

Die Erzeugung des COFDM-Sendesignals erfolgt z.B. digital mit Hilfe der inversen schnellen Fourier-Transformation (IFFT). Das Blockschaltbild eines COFDM-Senders ist in FIG. 14a dargestellt. Die in der Figur angeführten Bezugszeichen haben dabei folgende Bedeutung:

141a : komplexe Datensymbole (Vektor)
142a : differentielle Kodierung
143a : Sendesymbole (Vektor)
144a : Inverse Schnelle Fourier-Transformation (IFFT)
145a : digitales Sendesignal; Dauer: $t_s$
146a : periodische Fortsetzung
147a : digitales Sendesignal; Dauer: $T_s$
148a : Digital/Analog-Wandler (D/A)
149a : komplexes Sendesignal im Basisband

Für jeden Zeitschlitz i wird eine IFFT (144a) berechnet. Ihr Ausgangssignal (145a) hat die Dauer $t_s$. Es wird periodisch (146a) auf ein Signal (147a) der Dauer $T_s$ fortgesetzt.

Der COFDM-Demodulator dient zur Wiedergewinnung der informationstragenden Symbole $d_{i,k}$. Hierzu werden aus dem Empfänger-Eingangssignal r(t) die Größen

$$r_{i,k} = \frac{1}{t_s} \int_0^{t_s} x(t+iT_s) e^{-j2\pi k F_s t} dt \qquad (3)$$

gebildet, aus denen Schätzwerte $d_{i,k}$ für die Datensymbole durch differentielle Demodulation $d_{i,k} = r_{i,k} r^*_{i-1,k}$ gewonnen werden. Dabei ist r* konjugiert komplex zu r.

Auch der COFDM-Demodulator ist digital mit Hilfe der schnellen Fourier-Transformation (FFT) realisierbar. Er ist in FIG. 14b dargestellt. Die in der Figur angeführten Bezugszeichen haben dabei folgende Bedeutung:

141b : komplexes Empfangssignal im Basisband
142b : Analog/Digital-Wandler (A/D)
143b : digitales Empfangssignal; Dauer: $T_s$
144b : zeitliche Fensterung
145b : digitales Empfangssignal; Dauer: $t_s$
146b : Schnelle Fourier-Transformation (FFT)
147b : Empfangssymbole (Vektor)
148b : differentielle Demodulation
149b : empfangene Datensymbole (Vektor)

Für jeden Zeitschlitz wird ein Abschnitt (145b) der Dauer $t_s$ des Empfangssignals (141b) ausgewertet. Ein Abschnitt der Dauer $t_g$ bleibt unausgewertet. In diesem Abschnitt fallen die Echos des Signals aus dem vorangegangenen Zeitschlitz.

Die Datenübertragung beim COFDM-System ist rahmenorientiert. Ein Rahmen ist eine strukturierte Anordnung zeitlich aufeinander folgender Symbolblöcke. Er besitzt folgende, in FIG. 15 dargestellte Struktur:

Der erste Symbolblock $\vec{s}_1$ im Rahmen (k-1 bzw. k bzw. k+1) ist das Nullsymbol ($15_{NS}$). Es ist dadurch gekennzeichnet, daß kein Sendesignal abgestrahlt wird. Der Empfänger kann mit einem Hüllkurvendetektor den Feldstärkeeinbruch detektieren. Der Abstand zwischen den Nullsymbolen ($15_{NS}$) des n-ten und des (n+1)-ten Rahmens dient zur Rahmensynchronisation, die Dauer des Nullsymbols ($15_{NS}$) zur Symbolsynchronisation. Das Nullsymbol ($15_{NS}$) wird nicht mit der FFT verarbeitet. Es besitzt in der Regel eine von $T_s$ abweichende Länge.

Der zweite Symbolblock $\vec{s}_2$ im Rahmen (k-1 bzw. k bzw. k+1) ist das Phasenreferenz-Symbol ($15_{PR}$). Es wird zur Initialisierung des differentiellen Demodulators benötigt. Es ist bereits vorgeschlagen worden, hierfür ein komplexes Sweep-Signal: $s_{2,k} = \exp(j\pi k^2/N)$ zu verwenden.

Der Rest des Rahmens (k-1 bzw. k bzw. k+1) besteht aus informationstragenden Symbolblöcken ($15_1$ ... $15_n$).

COFDM erfordert, daß die Trägerfrequenzen von Sender und Empfänger sehr genau übereinstimmen. Die maximal tolerierbare Abweichung liegt in der Größenordnung von 5 % des Subkanalabstandes $F_s$. Das ist nur mit sehr teuren Spezialoszillatoren erreichbar, die für ein Massenprodukt ungeeignet sind. Besser ist es, einen geregelten Oszillator im Empfänger einzusetzen. Im Augenblick des Einschaltens kann dieser jedoch eine Frequenzabweichung in der Größenordnung mehrerer Subkanalabstände besitzen.

In dem Artikel von P.H. Moose "Differential Modulation and Demodulation of Multi-Frequency Digital Communications Signals"; in: 1990 IEEE Military Communications Conference MILCOM '90, Monterey, Calif., USA, 30.09.-03.10.90, Vol. 1, Seiten 273 - 277, IEEE New York, USA, wird ein Multi-Frequenz-Quadratur-Phase-Shift-Keying-Sende-/Empfangs-Verfahren beschrieben, bei dem die zu übertragenden digitalen Daten senderseitig zunächst differentiell kodiert werden, anschließend einer inversen diskreten Fourier-Transformation und nachfolgend einer Digital/Analog-Wandlung unterzogen werden. Empfängerseitig werden die empfangenen Daten einer Analog/Digital-Wandlung und einer Diskreten Fourier-Transformation unterzogen, bevor sie differentiell dekodiert und anschließend ausgegeben werden.

Ein ähnliches Verfahren wird in dem Artikel von J.A.C. Bingham "Multicarrier Modulation for Data Transmission: An Idea Whose Time Has Come"; in: IEEE Communications Magazine, Bd. 28, Nr. 5, Mai 1990, Piscataway, N.J., USA, Seiten 5 bis 14 beschrieben. Dort werden sendeseitig die zu übertragenden Daten zunächst in einen Seriell-nach-Parallel-Pufferspeicher gelesen, danach kodiert, einer inversen Fast-Fourier-Transformation unterzogen, digital/ analog gewandelt und tiefpaßgefiltert. Empfangsseitig läuft der Prozeß in umgekehrter Reihenfolge ab, d.h. die empfangenen Daten werden zunächst tiefpaßgefiltert, dann analog/digital gewandelt, in einen Seriell-nach-Parallel-Pufferspeicher gelesen, einer Fast-Fourier-Transformation unterzogen, dekodiert und in einen Parallel-nach-Seriell-Pufferspeicher gelesen und von dort ausgegeben.

In der DE 40 21 641 A1 ist ferner ein Verfahren zur Feinabstimmung eines Transversalentzerrers in einem Empfänger eines Datenübertragungssstems beschrieben. Bei diesem Verfahren wird mittels einer kurzen, nicht-periodischen Signalfolge ("Trainingssequenz"), die im empfangenen Signal enthalten ist, unmittelbar nach der Bestimmung der Anfangswerte der Koeffizienten des Entzerrers auf der Basis dieser Trainingssequenz die Feinabstimmung vorgenommen. Die für die Feinabstimmung benötigte Zeit und die benutzte Trainingssequenz werden bei diesem Verfahren reduziert, indem nur ein Teil der Frequenzkomponenten der Übertragungsfunktion des Entzerrers feinabgestimmt werden, während die übrigen Komponenten ihre Werte vor der Feinabstimmung beibehalten.

In der US-A 4 152 649 wird ebenfalls ein Transversalentzerrer für ein Datenübertragungssystem beschrieben, der eine Trainingssequenz verwendet. Die empfangene periodische Trainingssequenz wird im Zeitbereich mit Hilfe eines Fenstersignals moduliert, dessen Fourier-Transformierte eine relativ flache Zentrallinie zeigt und vergleichsweise niedrige Werte in der Nachbarschaft derjenigen Frequenzen, die ein Vielfaches des Inversen der Periode der gesendeten Trainingssequenz darstellen. Anschließend wird die diskrete Fourier-Transformierte $W_k$ des modulierten Signals berechnet. Die Werte der Koeffizienten des Entzerrers werden bestimmt, indem die inverse diskrete Fourier-Transformierte des Verhältnisses $F_k = Z_k/W_k$ berechnet wird, wobei $Z_k$ die diskrete Fourier-Transformierte der ausgesendeten Trainingssequenz ist.

Die Aufgabe der Erfindung besteht darin, einerseits ein Verfahren anzugeben, das in einem Mehrkanalübertragungssystem ohne großen Mehraufwand eine zuverlässige Synchronisation zwischen Sender und Empfänger in dem Übertragungssystem gestattet und andererseits einen Empfänger anzugeben, mit dem der empfangsseitige Teil des zu schaffenden Verfahrens durchgeführt werden kann und der möglichst einfach im Aufbau ist.

Die erfindungsgemäße Lösung in bezug auf den sendeseitigen Teil des zu schaffenden Verfahrens ist durch die Merkmale des Patentanspruchs 1 wiedergegeben und in bezug auf den empfangsseitigen Teil des zu schaffenden Verfahrens durch die Merkmale des Patentanspruchs 8 sowie in bezug auf den anzugebenden Empfänger durch die Merkmale des Patentanspruchs 20. Die übrigen Ansprüche enthalten vorteilhafte Aus- und Weiterbildungen des erfindungsgemäßen Verfahrens auf der Sendeseite (Ansprüche 2 bis 7) und auf der Empfangssseite (Ansprüche 9 bis 19) sowie des erfindungsgemäßen Empfängers (Anspruch 21).

Bei dem erfindungsgemäßen Verfahren wird die Idee genutzt, ein Testsignal wiederholt auszusenden, mit dessen Hilfe der Empfänger eine bestehende Frequenzabweichung ermitteln kann. Aus praktischen Gründen bietet es sich an, dieses Testsignal in jedem Rahmen zu senden. Die Grundidee der Erfindung ist, das bisher vorhandene Sweep-Signal durch dieses neue Testsignal zu ersetzen.

Ein Vorteil der Erfindung liegt darin, daß mit einem einzigen Testsignal sowohl die Frequenzablage gemessen werden kann als auch durch Bestimmung der Kanalstoßantwort die Feinsynchronisation.

Ein weiterer Vorteil ist, daß keine zusätzliche Kapazität des COFDM-Systems für dieses Testsignal benötigt wird, da es das bisherige Phasenreferenzsignal ersetzt.

Die Frequenzablage läßt sich vorteilhafterweise präzise und robust bestimmen. Die Genauigkeit der gemessenen Frequenzablage wird wegen der differentiellen Kodierung der CAZAC-Sequenz nicht durch Ungenauigkeiten der Synchronisation beeinflußt.

Da das Testsignal zur gleichzeitigen Kontrolle von Zeit, Frequenz und Phase dient, wird es Time-Frequency-Phase-Control-Symbolblock (TFPC) genannt.

Das TFPC basiert auf selbstorthogonalen Sequenzen konstanter Amplitude, sogenannten CAZAC (Constant Amplitude Zero Autocorrelation) Sequenzen. Es handelt sich hierbei um endliche Folgen, deren zyklische Autokorrelation für gegeneinander verschobene Sequenzen null ist (vgl. zum Thema CAZAC-Sequenzen und deren Verwendung in Sende-/Empfangssystemen: den Artikel von R.C. Heimiller "Phase Shift Pulse Codes With Good Periodic Correlation Properties"; in: IRE Transactions on Information Theory, Vol. IT-6, Okt. 1961, Seiten 254 bis 257 bzw. den Artikel von D.C. Chu "Polyphase Codes With Good Periodic Correlation Properties"; in: IEEE Transactions on Information Theory, Vol. IT-18, Juli 1972, Seiten 531 bis 532 bzw. den Artikel von R. Alexis "Search For Sequences With Zero Autocorrelaction"; in: Coding Theory & Applications, 2$^{nd}$ International Colloquium, 24.-26.11.86, Cachan-Paris, Frankreich (Springer-Verlag, Berlin, 1988), Seiten 159 bis 172 bzw. den Artikel von A. Milewski "Periodic Sequences With Optimal Properties For Channel Estimation And Fast Start-Up Equalization"; in: IBM Journal of Research and Development, Vol. 27, No. 5, Sept. 1983, New York, USA, Seiten 426 bis 431 bzw. den Artikel von F.F. Kretschmer/K. Gerlach "Low Sidelobe Radar Waveforms Derived from Orthogonal Matrices"; in: IEEE Transactions on Aerospace and Electronic Systems, Vol. 27, No. 1, Jan. 1991, Seiten 92 bis 101 bzw. FR-A 2 337 465 bzw. die bereits weiter oben genannte US-A 4 152 649). Zur Konstruktion des TFPC wird mindestens eine CAZAC-Sequenz benötigt. Es können auch mehrere sein, ebenfalls kann eine Sequenz mehrfach verwendet werden. Daher gibt es eine Vielzahl verschiedener als TFPC-geeigneter Kombinationen. Aus diesem Grund wird das TFPC zunächst allgemein definiert und dann anhand eines Ausführungsbeispiels verdeutlicht.

In einem Ausführungsbeispiel ist das TFPC der COFDM-Symbolblock $s_{2,k}$. Es ist dadurch gekennzeichnet, daß mindestens ein zusammenhängender Abschnitt $s_{2,ko}$, $s_{2,ko+1}$,..., $s_{2,ko+L-1}$ der Länge L existiert, der bis auf einen komplexen Multiplikator A einer endlichen Folge $x_i$, (i = 0, 1, ..., L - 1) entspricht: $s_{2,ko+i} = Ax_i$(i = 0, 1, ..., L - 1). Ein solcher Abschnitt wird als Trainingssequenz bezeichnet.

Dabei läßt sich $x_i$ folgendermaßen erzeugen:

Eine vierwertige CAZAC-Sequenz $c_m$, (m = 0, 1, ..., M - 1) der Länge M < L wird auf die Länge L - 1 periodisch fortgesetzt.
Dann wird $x_i$ durch

$$x_i = \begin{cases} 1 & \text{für } i = 0 \\ x_{i-1}\, c_{i-1} & \text{für } 1 \leq i \leq L - 1 \end{cases} \qquad (4)$$

definiert. $x_i$ ist also eine differentiell kodierte, periodisch fortgesetzte vierwertige CAZAC-Sequenz.

Für die Größen M und L gelten folgende Einschränkungen:

- M muß gültige Länge einer vierwertigen CAZAC-Sequenz sein. Derzeit sind vierwertige CAZAC-Sequenzen der Längen 4, 8 und 16 bekannt. Weiter ist bekannt, daß es keine vierwertigen CAZAC-Sequenzen anderer Länge kleiner als 16 gibt.

- Damit die unten beschriebene Korrelationsmessung genau ein ausgeprägtes Maximum besitzt, ist L < 2 M einzuhalten.

- Für den Meßbereich der unten beschriebenen Anordnung, d.h. die maximale Frequenzabweichung $\Delta$ F zwischen Sender und Empfänger, die gemessen werden kann, gilt

$$-\frac{L\text{-}M\text{-}1}{2} F_g \leq \Delta F \leq \frac{L\text{-}M\text{-}1}{2} F_g.$$

Dabei sind die Divisionen als Integer-Divisionen zu verstehen.

- Es ist günstig, wenn L - M eine ungerade Zahl ist, da das System dann den gleichen Meßbereich besitzt, als würde eine Trainingssequenz der Länge L + 1 eingesetzt. Dies wird im Folgenden vorausgesetzt. Bei geradem L - M sind einige Algorithmen leicht zu modifizieren.

Das TFPC kann mehrere der zuvor beschriebenen Trainingssequenzen enthalten, die sich auch überlappen dürfen. Dabei können die unterschiedlichen Trainingssequenzen auf der gleichen oder auch auf verschiedenen CAZAC-Sequenzen basieren.

Existieren Symbole $s_{2,k}$ des TFPC, die nicht zu mindestens einer Trainingssequenz der zuvor diskutierten Art gehören, so können diese beliebige von null verschiedene Werte annehmen.

Besonders günstige Verhältnisse sind dann gegeben, wenn alle Symbole $s_{2,k}$ des TFPC die gleiche Amplitude besitzen.

In einem Ausführungsbeispiel besteht das TFPC aus einer durch vier teilbaren Anzahl von Trainingssequenzen. Sie ist aus vier CAZAC-Sequenzen aufgebaut, die aus einer CAZAC-Sequenz durch Multiplikation mit 1, j, - 1, - j erzeugt worden sind. Diese Anordnung ergibt besonders gute Genauigkeit und gleichzeitig besonders geringen Rechenaufwand bei der Auswertung. Der Modulator verwendet eine 128-Punkte IFFT, so daß insgesamt 128 Subkanäle zur Verfügung stehen. Sie werden von 0 bis 127 durchnummeriert. Von diesen 128 Trägern werden aus filtertechnischen Gründen nur 86 moduliert, die sogenannten aktiven Subkanäle. Es sind dies die Träger mit den Nummern 20 bis 63 und 65 bis 107. Der Träger mit der Nummer 64 ist in diesem Beispiel aus technischen Gründen nicht benutzbar.

Die grundlegende CAZAC-Sequenz ist hier gegeben durch:

| $i$ | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| $c_{0,i}$ | -j | -1 | 1 | 1 | -1 | -j | 1 | -1 | j | 1 | 1 | 1 | 1 | j | 1 | -1 |

Hieraus werden drei CAZAC-Sequenzen durch Multiplikation mit j, -1, -j erzeugt:

| $i$ | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| $c_{1,i}$ | 1 | -j | j | j | -j | 1 | j | -j | -1 | j | j | j | j | -1 | j | -j |
| $c_{2,i}$ | j | 1 | -1 | -1 | 1 | j | -1 | 1 | -j | -1 | -1 | -1 | -1 | -j | -1 | 1 |
| $c_{3,i}$ | -1 | j | -j | -j | j | -1 | -j | j | 1 | -j | -j | -j | -j | 1 | -j | j |

Die Länge der CAZAC-Sequenzen in diesem Beispiel beträgt M = 16. Es wird L zu 23 gewählt, dann kann eine Frequenzabweichung von +/-3 Subkanalabständen gemessen werden.

Durch differentielle Kodierung folgen aus den nach vorne und nach hinten jeweils um 3 Elemente fortgesetzten CAZAC-Sequenzen $c_{l,i}$ die Trainingssequenzen $x_{l,i}$.

| $i$ | 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|
| $x_{0,i}$ | 1 | j | j | -j | -1 | 1 | 1 | 1 | -1 | j | j | -j | 1 | 1 | 1 | 1 |
| $x_{1,i}$ | 1 | -1 | -j | -1 | -1 | j | -1 | -j | -1 | -1 | -j | -1 | 1 | j | -1 | -j |
| $x_{2,i}$ | 1 | -j | j | j | -1 | -1 | 1 | -1 | -1 | -j | j | j | 1 | -1 | 1 | -1 |
| $x_{3,i}$ | 1 | 1 | -j | 1 | -1 | -j | -1 | j | -1 | 1 | -j | 1 | 1 | -j | -1 | j |

| $i$ | 16 | 17 | 18 | 19 | 20 | 21 | 22 |
|---|---|---|---|---|---|---|---|
| $x_{0,i}$ | 1 | j | j | -j | -1 | 1 | 1 |
| $x_{1,i}$ | 1 | -1 | -j | -1 | -1 | j | -1 |
| $x_{2,i}$ | 1 | -j | j | j | -1 | -1 | 1 |
| $x_{3,i}$ | 1 | 1 | -j | 1 | -1 | -j | -1 |

Für die komplexen Skalierungsfaktoren $A_l$ werden folgende Werte gezählt:

| $l$ | 0 | 1 | 2 | 3 |
|---|---|---|---|---|
| $A_l$ | 1 | 1 | -j | -1 |

Es werden Indexoffsets $k_l$ definiert:

6

| $l$ | 0 | 1 | 2 | 3 |
|---|---|---|---|---|
| $k_l$ | 21 | 40 | 65 | 84 |

Das TFPC besteht aus vier Trainingssequenzen. Der TFPC-Vektor der Dimension 128 ist hier definiert zu:

$$s_{2,k} = \begin{cases} A_0\, x_{0,k-k_0} & \text{für } 21 \leq k < 44 \\ A_2\, x_{2,k-k_2} & \text{für } 40 \leq k < 63 \\ A_1\, x_{1,k-k_1} & \text{für } 65 \leq k < 88 \\ A_3\, x_{3,k-k_3} & \text{für } 84 \leq k < 107 \\ 1 & \text{für } k = 63, k = 107 \\ 0 & \text{sonst} \end{cases}$$

Zu beachten ist erstens, daß sich in diesem Beispiel die Trainingssequenzen überlappen (in den Bereichen k = 40...43 und k = 84...87), zweitens, daß die Subkanäle K = 63 und k = 107 nicht Bestandteil einer Trainingssequenz sind und deshalb willkürlich gesetzt wurden, drittens, daß dieses TFPC konstante Amplitude in allen aktiven Subkanälen besitzt, und viertens, daß es aus vier CAZAC-Sequenzen aufgebaut ist, die durch Multiplikation mit 1, j, -1, -j aus einer CAZAC-Sequenz erzeugt worden sind.

Für die Auswertung des TFPC wird vorausgesetzt, daß der Empfänger bereits eine grobe Symbolsynchronisierung aufgrund der Auswertung des Nullsymbols besitzt. Der zugelassene Synchronisationsfehler liegt in der Größenordnung +/- 0,5 $t_g$. Er ist dann in der Lage, das TFPC-Signal zeitlich zu lokalisieren und der FFT zu unterwerfen. Am Ausgang der FFT liegt entsprechend Gℓ. 3 der Vektor $\gamma_2$ an. Dieser Vektor wird jetzt einer besonderen Verarbeitung unterworfen, die im Folgenden beschrieben ist.

Der Empfänger hat das gesendete TFPC-Symbol eingespeichert. Ebenso sind die im TFPC enthaltenen Trainingssequenzen, deren Lage im TFPC und die ihnen zugrunde liegenden CAZAC-Sequenzen bekannt.

Die Verarbeitung des TFPC unterteilt sich in mehrere Unteraufgaben, die ihrerseits aus verschiedenen Verarbeitungsschritten bestehen. Die Unteraufgaben sind:

- Grobe Messung der Frequenzabweichung zwischen Sender und Empfänger.

- Feinmessung der Frequenzabweichung zwischen Sender und Empfänger.

- Messung der Stoßantwort des Funkkanals.

- Aufbau der Phasenreferenz für die differentielle Demodulation.

Gemeinsame Eingangsgröße für alle Unteraufgaben ist $\gamma_2$.

Die grobe Messung der Frequenzabweichung zwischen Sender und Empfänger bestimmt diese auf die Größenordnung eines Subkanalabstandes genau. Folgende Verarbeitungsschritte sind hierzu notwendig:

1.: Isolation der empfangenen Trainingssequenzen $\gamma_{2,k0+1}$. Die Lage der Trainingssequenzen im gesendeten TFPC wird als bekannt vorausgesetzt. Eine Trainingssequenz beginnt im gesendeten TFPC bei $s_{2,ko}$. Dann wird durch

$$u_k = \gamma_{k+k_0+\frac{L-M-1}{2}} \qquad 0 \leq k \leq M \tag{5}$$

der (M + 1)-dimensionale Vektor u berechnet. Enthält das TFPC mehrere Trainingssequenzen, wird dies für jede in gleicher Weise gemacht und man erhält mehrere Vektoren $u_i$.

2.: Differentielle Demodulation. Mit Hilfe der Gleichung

$$v_k = u_{k+1}\, u_k^* \qquad 0 \leq k < M \tag{6}$$

7

wird der M-dimensionale Vektor u berechnet. Enthält das TFPC mehrere Trainingssequenzen, wird dies für jede in gleicher Weise gemacht und man erhält mehrere Vektoren $u_i$.

3.: Zyklische Korrelation mit der CAZAC-Sequenz. Der Vektor u wird mit der der Trainingssequenz zugrunde liegenden CAZAC-Sequenz korreliert. Der (L - M)-dimensionale Vektor w wird mit der Gleichung

$$w_k = \sum_{m=0}^{M-1} v_m \, c^{*}_{(m-k)\bmod M} \qquad -K \leq k \leq K = \frac{L - M - 1}{2} \qquad (7)$$

berechnet. Bei mehreren Trainingssequenzen im TFPC wird diese Rechnung für jedes $u_i$ durchgeführt und man erhält die zugehörigen $w_i$. Diese werden dann zu einem Vektor aufaddiert: $w = \Sigma_i w_i$.

4.: Es wird das betragsgrößte $w_k$ bestimmt. Der zugehörige Index $k_{max}$ gibt die gesuchte Frequenzabweichung an: $\Delta F = k_{max} \, F_s$.

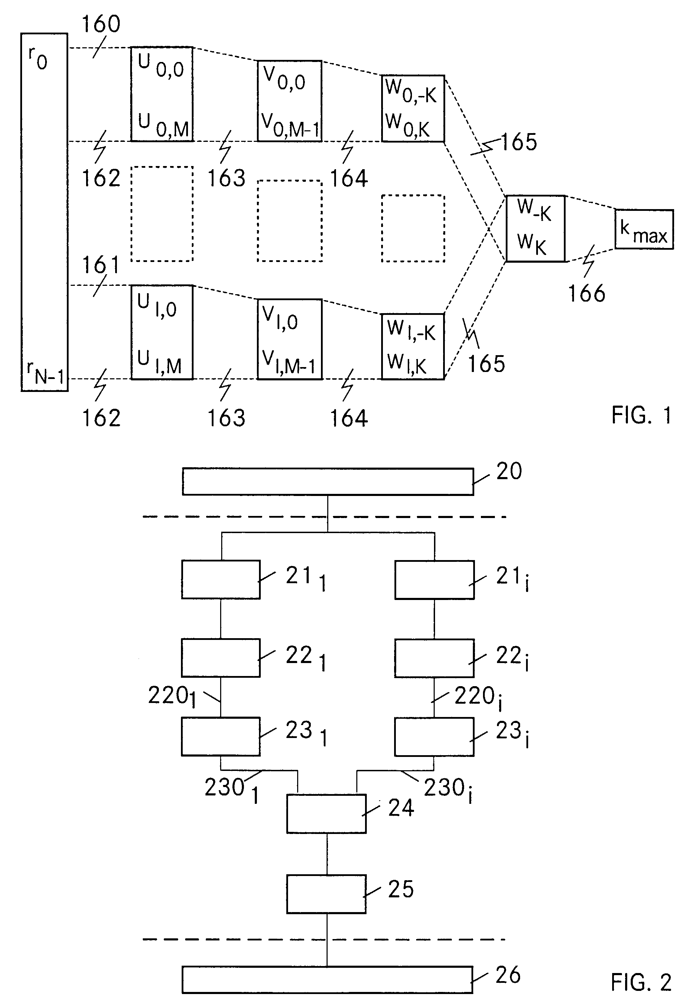

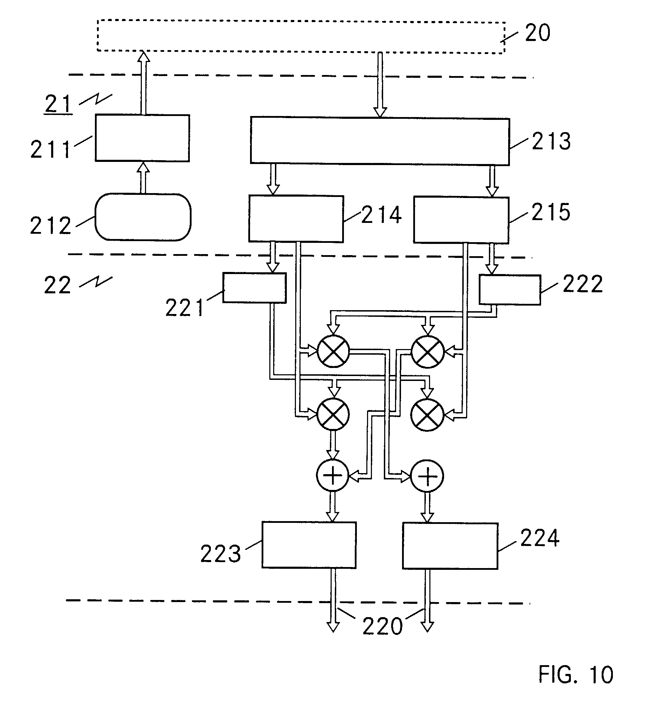

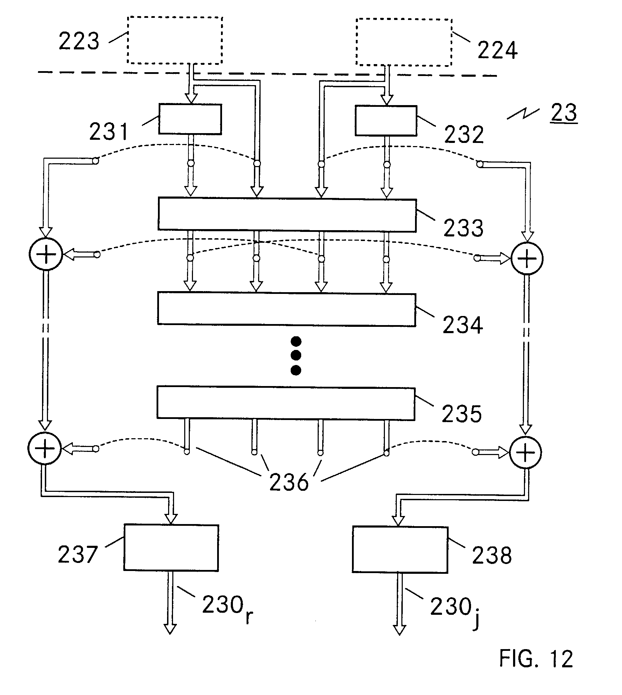

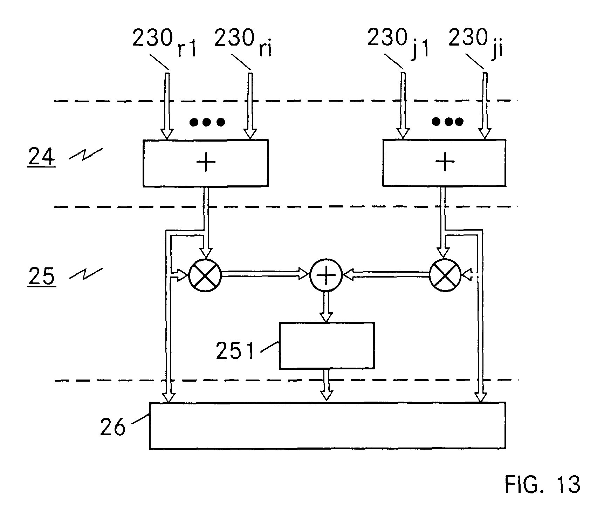

Die Korrelation mit der CAZAC-Sequenz wird dadurch vereinfacht, daß $c_m$ nur die Werte 1, j, -1 und -j annimmt. Der oben beschriebene Verarbeitungsablauf ist schematisch in FIG. 1 wiedergegeben. Die Anordnung der einzelnen Baugruppen ist in FIG. 2 dargestellt. Ein beispielhafter Aufbau eines Isolators ist in FIG. 10 angegeben. Der Aufbau eines beispielhaften Korrelators sowie eines Vektoraddierers ist aus den FIG. 12 und 13 zu entnehmen. Die in den FIG. 1, 2, 10, 12 und 13 verwendeten Bezugszeichen haben dabei folgende Bedeutung:

FIG. 1

| | |
|---|---|
| 160 : | Trainingssequenz 0 |
| 161 : | Trainingssequenz 1 |
| 162 : | Isolation der Trainigsseq. |
| 163 : | differentielle Demodulation |
| 164 : | Korrelation mit CAZAC |
| 165 : | Summation |
| 166 : | Suche nach Betragsmaximum |

FIG. 2

| | |
|---|---|
| 20 : | Speicher für FFT-Ausgangsvektor |
| $21_1$ : | Isolator der Trainingssequenz 1 |
| $22_1$ : | differentieller Demodulator 1 |
| $220_1$ : | Ausgangsleitung des differentiellen Demodulators 1 zum CAZAC-Korrelator 1 |
| $23_1$ : | CAZAC-Korrelator 1 |
| $230_1$ : | Ausgangsleitung des CAZAC-Korrelators 1 zum komplexen Vektoraddierer |
| $21_i$ : | Isolator der Trainingssequenz i |
| $22_i$ : | differentieller Demodulator i |
| $220_i$ : | Ausgangsleitung des differentiellen Demodulators i zum CAZAC-Korrelator i |
| $23_i$ : | CAZAC-Korrelator i |
| $230_i$ | Ausgangsleitung des CAZAC-Korrelators i zum komplexen Vektoraddierer |
| 24 : | Komplexer Vektoraddierer |
| 25 : | Maximum Betragsquadrat |
| 26 : | Speicher für berechnete Ergebnisse |

FIG. 10

| | |
|---|---|
| 20 : | Speicher für FFT-Ausgangsvektor |
| 21 : | Isolator der Trainingssequenz |
| 211 : | Adreßgenerator |
| 212 : | Startwert (ROM) |
| 213 : | 1 nach 2 Demultiplexer |

| 214 : | FIFO-Realteil |
|---|---|
| 215 : | FIFO Imaginärteil |
| 22: : | differentieller Demodulator |
| 221 : | Verzögerung: 1 Takt |
| 222 : | Verzögerung: 1 Takt |
| 223 : | FIFO Realteil |
| 224 : | FIFO Imaginärteil |
| 220 : | Ausgangsleitung des differentiellen Demodulators zum Korrelator |

FIG. 12

| 223 : | FIFO Realteil des differentiellen Demodulators |
|---|---|
| 224 : | FIFO Imaginärteil des differentiellen Demodulators |
| 23 : | CAZAC-Korrelator |
| 231 : | Inverter |
| 232 : | Inverter |
| 233 : | Verzögerung: 1 Takt |
| 234 : | Verzögerung: 1 Takt |
| 235 : | Verzögerung: 1 Takt |
| 236 : | Abgriffe variabel programmierbar entsprechend verwendeter CAZAC-Sequenz |
| 237 : | FIFO Realteil |
| 238 : | FIFO Imaginärteil |
| $230_r$ : | Ausgangsleitung des FIFO Realteils |
| $230_j$ : | Ausgangsleitung des FIFO Imaginärteils |

FIG. 13

| $230_{r1}$ : | Ausgangsleitung des FIFO Realteils 1 |
|---|---|
| $230_{ri}$ : | Ausgangsleitung des FIFO Realteils i |
| $230_{j1}$: | Ausgangsleitung des FIFO Imaginärteils 1 |
| $230_{ji}$: | Ausgangsleitung des FIFO Imaginärteils i |
| 24 : | komplexer Vektoraddierer |
| 25 : | Maximum Betragsquadrat |
| 251 : | Logik zur Maximumsuche |
| 26 : | Ergebnisspeicher |

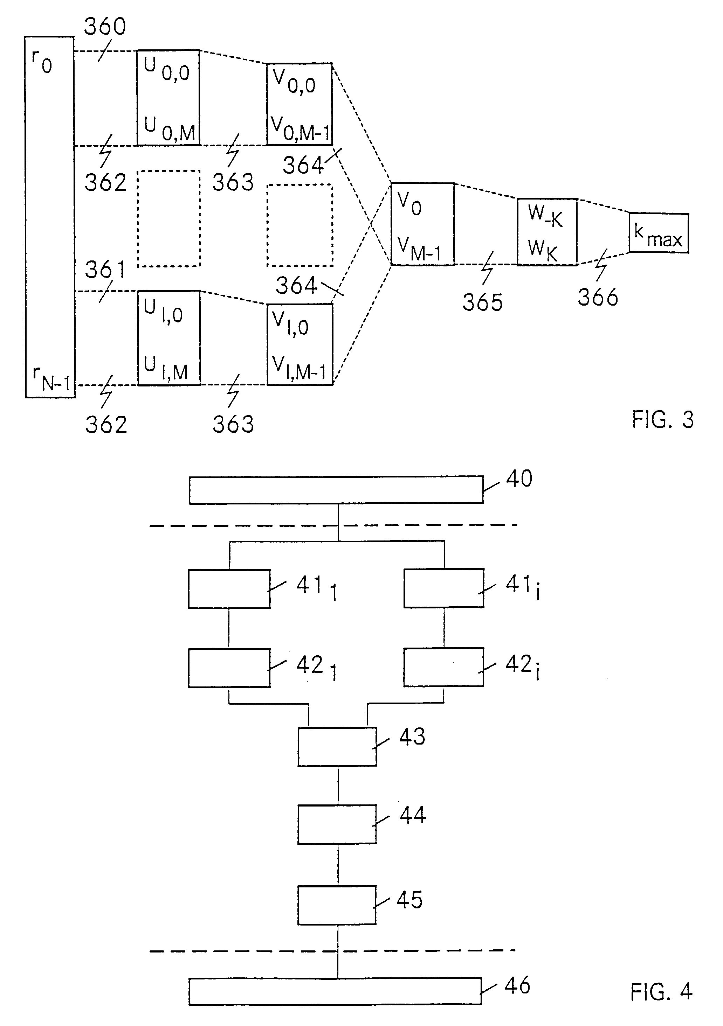

Das erfindungsgemäße Verfahren vereinfacht sich erheblich, wenn das TFPC aus vier CAZAC-Sequenzen aufgebaut ist, die aus einer CAZAC-Sequenz erzeugt wurden. Dann lassen sich die zu den verschiedenen Trainingssequenzen gehörenden Vektoren bereits direkt nach der differentiellen Demodulation kombinieren. Hierzu wird $u = \Sigma_i \alpha_i u_i$ gebildet. Die $\alpha_i$ nehmen dabei die Werte 1, j, -1 und -j an. $\alpha_i$ ist konjugiert komplex zu dem Faktor, mit dem die ursprüngliche CAZAC-Sequenz multipliziert wurde, um die der i-ten Trainingssequenz zugrunde liegende CAZAC-Sequenz zu erzeugen. Durch das Kombinieren der Signale ist jetzt nur noch einmal die Korrelation mit der CAZAC-Sequenz zu berechnen. FIG. 3 zeigt den vereinfachten Verarbeitungsablauf in diesem Spezialfall. FIG. 4 gibt die entsprechende Anordnung wieder. Die in den FIG. 3 und 4 verwendeten Bezugszeichen haben dabei folgende Bedeutung:

FIG. 3

| 360 : | Trainingssequenz 0 |
|---|---|
| 361 : | Trainingssequenz 1 |
| 362 : | Isolation der Trainingsseq. |
| 363 : | differentielle Demodulation |
| 364 : | Summation |
| 365 : | Korrelation mit CAZAC |
| 366 : | Suche nach dem Betragsmaximum |

FIG. 4

| 40 | Speicher für FFT-Ausgangsvektor |
|---|---|

$41_1$ : Isolator der Trainingssequenz 1

$42_1$ : differentieller Demodulator 1

$41_i$ : Isolator der Trainingssequenz i

$42_i$ : differentieller Demodulator i

43 : komplexer Vektoraddierer

44 : CAZAC-Korrelator

45 : Maximum Betraasauadrat

46 : Speicher für berechnete Ergebnisse

Das Verfahren zur präzisen Bestimmung der Frequenzablage zwischen Sender und Empfänger erlaubt, diese auf den Bruchteil des Unterträgerabstandes genau zu bestimmen. Es setzt die grobe Kenntnis der Frequenzablage voraus, baut also auf dem zuvor beschriebenen Verfahren zur Grobbestimmung der Frequenzablage auf. Dort wurde der Index $k_{max}$ des Korrelationsmaximums gefunden. Dieser Index wird für die folgende Verarbeitung als bekannt vorausgesetzt. Weiter sei der Vektor w bekannt. Dann erfolgt die präzise Bestimmung der Frequenzablage nach folgendem Ablauf:

1.: Isolation der Trainingssequenzen. Die Lage der Trainingssequenzen im gesendeten TFPC wird als bekannt vorausgesetzt. Eine Trainingssequenz beginnt im gesendeten TFPC bei $s_{2,ko}$. Dann wird durch

$$u_k^{'} = \gamma_{k + k_0 + k_{max} + \frac{L\text{-}M\text{-}1}{2}} \qquad 0 \leq k \leq M+1 \qquad (8)$$

der $(M + 2)$-dimensionale Vektor u' berechnet. Enthält das TFPC mehrere Training-Sequenzen, wird dies für jede in gleicher Weise gemacht und man erhält mehrere Vektoren $u'_i$.

2.: Modifizierte differentielle Demodulation. Mit Hilfe der Gleichung

$$v_k^{'} = u_{k+1}^{'} \; u_{k+1}^{'*} + u_{k+2}^{'} \; u_k^{'*} \qquad 0 \leq k \leq M \qquad (9)$$

wird der M-dimensionale Vektor u' berechnet. Enthält das TFPC mehrere Trainingssequenzen, wird dies für jede in gleicher Weise gemacht und man erhält mehrere Vektoren $v'_i$.

3.: Reduzierte zyklische Korrelation mit der CAZAC-Sequenz. Der Vektor v' wird mit der der Training-Sequenz zugrunde liegenden CAZAC-Sequenz korreliert. Es werden die Werte

$$B = \sum_{m=0}^{M-1} v_m^{'} \; c_m^{*} \qquad (10)$$

und

$$C = \sum_{m=0}^{M-1} v_m^{'} \; c_{(m+1)\bmod M}^{*} \qquad (11)$$

berechnet. Bei mehreren Trainingssequenzen im TFPC wird diese Rechnung für jedes $v'_i$ durchgeführt und man erhält die zugehörigen $B_i$ und $C_i$. Diese werden dann jeweils aufaddiert: $C = \Sigma_i C_i$ und $B = \Sigma_i B_i$.

4.: Aus der Grobbestimmung der Frequenzablage steht der Wert $w_{kmax}$ zur Verfügung. Es werden die Größen D $= 2 \, w_{kmax} - C$ berechnet. Die genaue Messung der Frequenzabweichung erfolgt dann mit

$$\Delta F \quad = \quad F_s \left( k_{max} + \frac{EC^* - DB^*}{EE^* + DD^*} \right) \qquad\qquad (12)$$

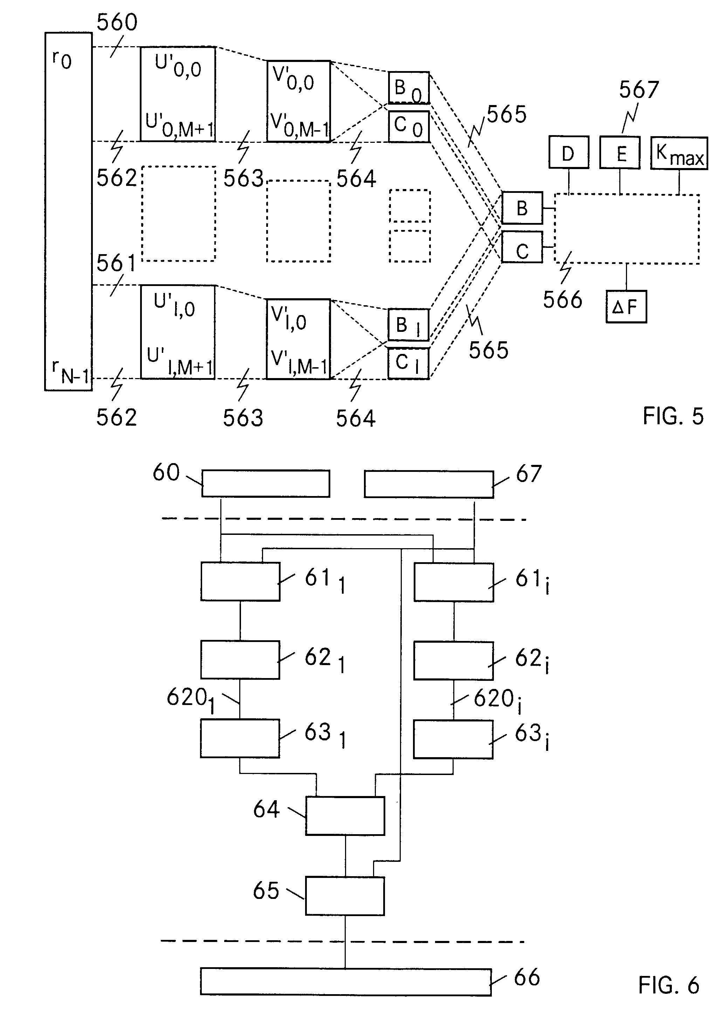

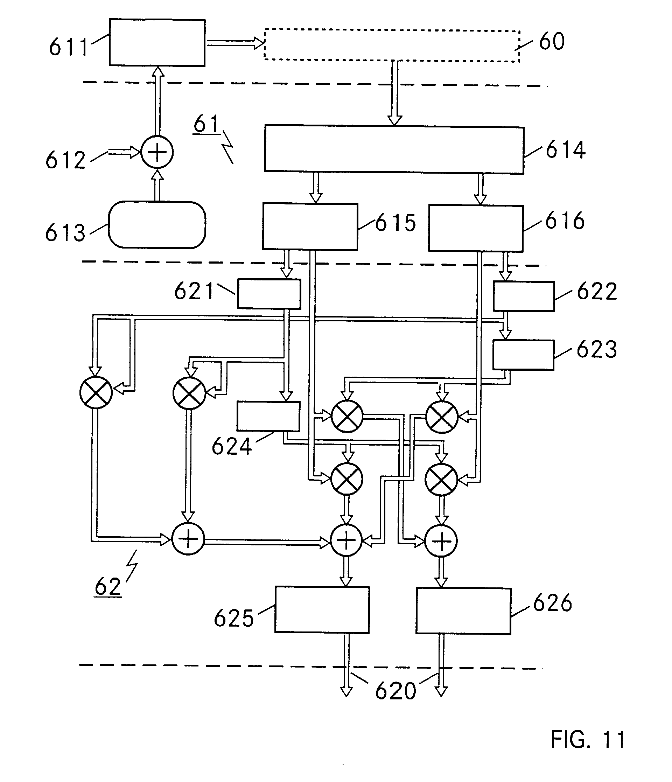

Der oben beschriebene Ablauf zur präzisen Messung der Frequenzablage ist in FIG. 5 dargestellt. FIG. 6 zeigt eine entsprechende Anordnung. In FIG. 11 ist der Aufbau eines beispielhaften modifizierten Isolators dargestellt. Die in den FIG. 5, 6 und 11 verwendeten Bezugszeichen haben dabei folgende Bedeutung:

FIG. 5

560 : Trainingssequenz 0
561 : Trainingssequenz 1
562 : Isolation der Trainingsseq.
563 : modifizierte differentielle Demodulation
564 : Korrelation mit CAZAC
565 : Summation
566 : Gleichung 12
567 : aus Grobbestimmung

FIG. 6

60 : Speicher für FFT-Ausgangsvektor
$61_1$ : modifizierter Isolator der Trainingsequenz 1
$62_1$ : modifizierter differentieller Demodulator 1
$620_1$ : Ausgangsleitung des modifizierten differentiellen Demodulators 1 zum Korrelator 1
$63_1$ : CAZAC-Korrelator 1
$61_i$ : modifizierter Isolator der Trainingssequenz i
$62_i$ : modifizierter differentieller Demodulator i
$620_i$ : Ausgangsleitung des modifizierten differentiellen Demodulators i zum Korrelator i
$63_i$ : CAZAC-Korrelator i
64 : komplexer Vektoraddierer
65 : Auswertung der Gleichung 12
66 : Speicher für berechnete Ergebnisse
67 : Ergebnisspeicher Grobbestimmung

FIG. 11

60 : Speicher für FFT-Ausgangsvektor
61 : modifizierter Isolator der Trainingssequenz
611 : Adressgenerator
612 : Offset aus Grobbestimmung
613 : Startwert (ROM)
614 : 1 nach 2 Demultiplexer
615 : FIFO Realteil
616 : FIFO Imaginärteil
62 : modifizierter differentieller Demodulator
621 : Verzögerung: 1 Takt
622 : Verzögerung: 1 Takt
623 : Verzögerung: 1 Takt
624 : Verzögerung: 1 Takt
625 : FIFO Realteil
626 : FIFO Imaginärteil
620 : Ausgangsleitung zum Korrelator

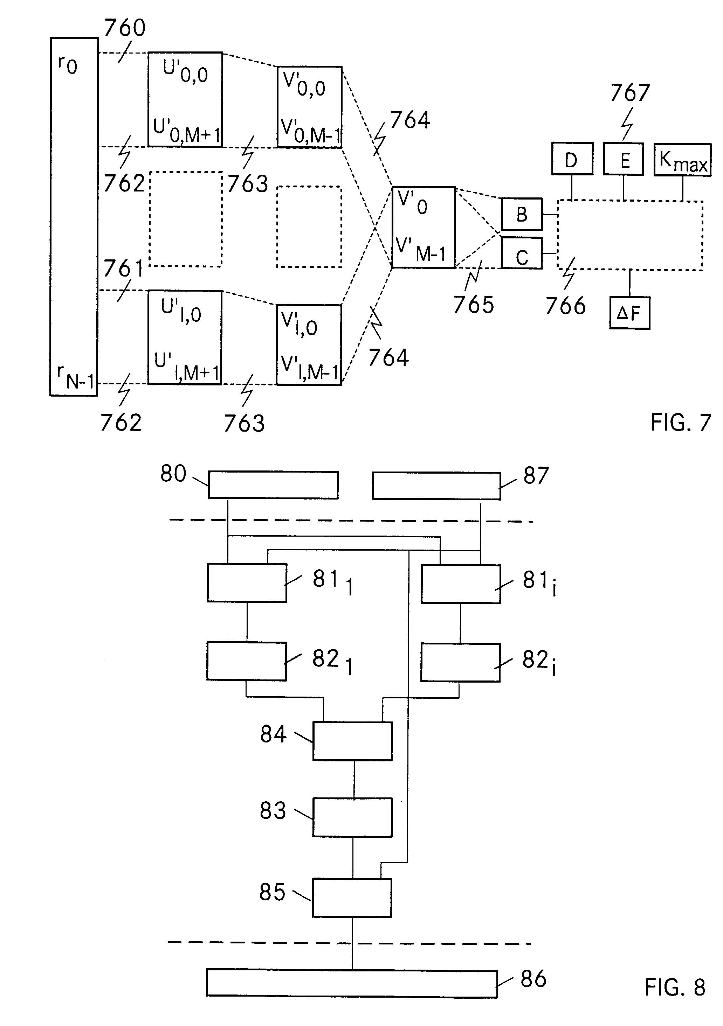

Mit einem aus vier CAZAC-Sequenzen aufgebauten TFPC ist es möglich, die verschiedenen Trainingssequenzen vor der zyklischen Korrelation zu kombinieren. Die hierbei erzielte Reduzierung des Rechenaufwands ist jedoch, da hier nur zwei Werte der Korrelationsfunktion berechnet werden, nicht so signifikant wie bei der Grobbestimmung der Frequenzablage, wo L - M Werte berechnet wurden. FIG. 7 zeigt den Ablauf in diesem Spezialfall. FIG. 8 gibt eine beispielhafte Anordnung für den Spezialfall an. Die in den FIG. 7 und 8 verwendeten Bezugszeichen haben dabei folgende Bedeutung:

FIG. 7

| | |
|---|---|
| 760 : | Trainingssequenz 0 |
| 761 : | Trainingssequenz 1 |
| 762 : | Isolation der Trainingsseq. |
| 763 : | modifizierte differentielle Demodulation |
| 764 : | phasenrichtige Summation |
| 765 : | Korrelation mit CAZAC |
| 766 : | Gleichung 12 |
| 767 : | aus Grobbestimmung |

FIG. 8

| | |
|---|---|
| 80 : | Speicher für FFT-Ausgangsvektor |
| $81_1$ : | modifizierter Isolator der Trainingssequenz 1 |
| $82_1$ : | modifizierter differentieller Demodulator 1 |
| $81_i$ : | modifizierter Isolator der Trainingssequenz i |
| $82_i$ : | modifizierter differentieller Demodulator i |
| 83 : | CAZAC-Korrelator |
| 84 : | komplexer Vektoraddierer |
| 85 : | Auswertung Gleichung 12 |
| 86 : | Speicher für berechnete Ergebnisse |
| 87 : | Ergebnisspeicher Grobbestimmung |

Zur Messung der Kanalstoßantwort wird der Vektor $r_2$ mit dem konjugiert komplexen TFPC-Sendesignal $s_2$, das im Empfänger abgespeichert ist, elementweise multipliziert. Es ergibt sich der N-dimensionale Vektor H mit

$$H_k = r_{2,k}\, s_{2,k}^{*} \tag{13}$$

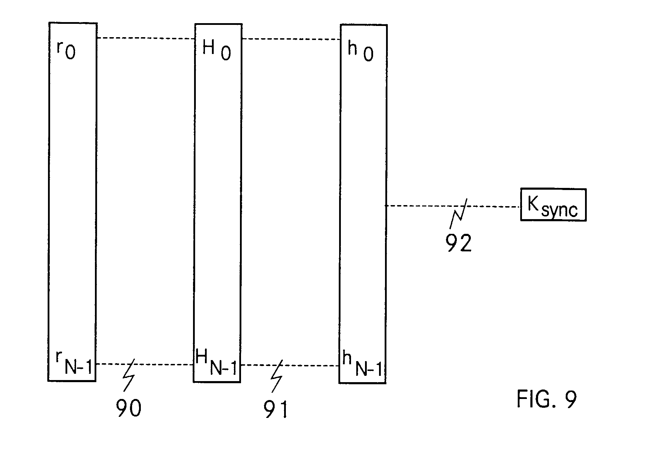

H ist eine Schätzung der Übertragungsfunktion des Kanals. Dieser Vektor wird mit der inversen schnellen Fourier-Transformation (IFFT) in den Vektor h transformiert, der die Schätzung der Kanalstoßantwort darstellt. Durch Bestimmung des ersten Indexes $k_{sync}$ bei dem die Kanalstoßantwort einen signifikanten Energieanteil besitzt, erfolgt die Feinsynchronisation. Der Ablauf zur Messung der Kanalstoßantwort ist in FIG. 9 dargestellt. Die in der FIG. 9 verwendeten Bezugszeichen haben dabei folgende Bedeutung:

| | |
|---|---|
| 90 : | Multiplikation mit konj. kompl. TFPC |
| 91 : | IFFT |
| 92 : | Suche nach erstem Peak |

Das TFPC ist auch als Phasenreferenz geeignet, da es in jedem aktiven Subkanal einen von null verschiedenen Energieanteil besitzt. Das in jedem Subkanal auf die Amplitude 1 normierte TFPC wird senderseitig dem differentiellen Kodierer und empfängerseitig dem differentiellen Demodulator zugeführt. Wenn das TFPC in allen Subkanälen konstante Energieanteile besitzt, so ist dies von Vorteil, da dann im Rauschkanal das Phasenrauschen auf allen Subkanälen gleich stark ist.

**Patentansprüche**

1.  Verfahren zur Erzeugung eines mehrere Symbolblöcke enthaltenden Sendesignals für ein Mehrkanalübertragungssystem, <u>dadurch gekennzeichnet,</u> daß in mindestens einem Symbolblock S ein Testsignal ausgesendet wird, das zumindest eine periodisch fortgesetzte, differentiell kodierte, selbstorthogonale Sequenz konstanter Amplitude enthält.

**2.** Verfahren nach Anspruch 1, dadurch gekennzeichnet, daß in dem das Testsignal enthaltenden Symbolblock S mindestens eine Trainingssequenz in Form eines zusammenhängenden Abschnitts von Sendesymbolen $S_{k0+i}$ der Länge L, mit $i = 0, 1, \ldots L-1$, dadurch erzeugt wird, daß differentiell kodierte, periodisch fortgesetzte, selbstorthogonale Sequenzen $x_i$ konstanter Amplitude mit einem komplexen Multiplikator A multipliziert werden und daß die Sequenzen $x_i$ aus selbstorthogonalen Sequenzen $c_i$ konstanter Amplitude der Länge $M < L$ aufgebaut werden, wobei gilt

$$x_i = \begin{cases} 1 & \text{für } i = 0 \\ x_{i-1}c_{(i-1)\bmod M} & \text{für } 1 \leq i \leq L-1 \end{cases}$$

**3.** Verfahren nach Anspruch 2, dadurch gekennzeichnet, daß das Testsignal aus einer durch vier teilbaren Anzahl n von Trainingssequenzen aufgebaut wird, die aus einer einzigen selbstorthogonalen Sequenz $c_{0,i}$ konstanter Amplitude erzeugt werden, derart, daß aus ihr zunächst n selbstorthogonale Sequenzen $c_{l,i}$ konstanter Amplitude mit $l = 0, 1, \ldots n-1$ berechnet werden, die dann zum Aufbau der Trainingssequenzen verwendet werden, wobei gilt

$$c_{l,i} = e^{j2\pi(l/n)} c_{0,i}.$$

**4.** Verfahren nach einem der vorherigen Ansprüche, dadurch gekennzeichnet, daß das Testsignal regelmäßig wiederholt wird.

**5.** Verfahren nach einem der vorherigen Ansprüche, dadurch gekennzeichnet, daß das Sendesignal eine Rahmenstruktur aufweist und daß jeder Rahmen ein Testsignal enthält.

**6.** Verfahren nach Anspruch 5, dadurch gekennzeichnet, daß innerhalb eines Rahmens das Testsignal im zweiten Symbolblock $S_2$ enthalten ist.

**7.** Verfahren nach einem der vorhergehenden Ansprüche, dadurch gekennzeichnet, daß ein differentielles Modulationsverfahren zwischen benachbarten Symbolblöcken eingesetzt wird und daß das Testsignal als Phasenreferenzsymbol verwendet wird.

**8.** Verfahren zur Synchronisation eines Empfängers eines Mehrkanalübertragungssystems auf den Sender des Systems mittels vom Sender ausgesendeten und mehrere Symbolblöcke enthaltenden Sendesignalen, erzeugt mit dem Verfahren nach einem der vorhergehenden Ansprüche, dadurch gekennzeichnet,
daß das in mindestens einem Symbolblock S des vom Empfänger empfangenen Sendesignals enthaltene und zumindest eine periodisch fortgesetzte, differentiell kodierte, selbstorthogonale Sequenz konstanter Amplitude enthaltende Testsignal im Empfänger zunächst identifiziert und anschließend ausgewertet wird, indem mindestens eine im Testsignal enthaltene Trainingssequenz isoliert, differentiell demoduliert, mit der zumindest einen selbstorthogonalen Sequenz konstanter Amplitude zyklisch korreliert und anschließend anhand des Korrelationsergebnisses

- die Trägerfrequenzablage zwischen Sender und Empfänger und/oder
- der Synchronisationsfehler zwischen Sender und Empfänger und/ oder
- die Stoßantwort des Übertragungskanals zwischen Sender und Empfänger

festgestellt wird (werden) und anhand der festgestellten Trägerfrequenzablage und/oder des festgestellten Synchronisationsfehlers und/oder der festgestellten Stoßantwort des Übertragungskanals die Synchronisation des Empfängers auf dem Sender durchgeführt wird.

**9.** Verfahren nach Anspruch 8, dadurch gekennzeichnet, daß beim Mehrkanalübertragungsverfahren ein differentielles Demodulationsverfahren zwischen benachbarten Symbolblöcken eingesetzt wird, und daß das Testsignal als Phasenreferenzsymbol zur Initialisierung des differentiellen Demodulationsverfahrens verwendet wird.

**10.** Verfahren nach einem der Ansprüche 8 oder 9, dadurch gekennzeichnet, daß zur Messung der Trägerfrequenzablage zwischen Sender und Empfänger folgende Verfahrensschritte auf dem empfangenen Testsignal oder auf dem empfangenen und vorverarbeiteten Testsignal nach Ausführung einer schnellen Fourier-Transformation FFT durchgeführt werden:

a) Isolierung der mindestens einen empfangenen Trainingssequenz in Form einer Trainingssequenz $r_{p,k0+i}$ der Länge M+1 mit $0{,}5 \bullet (L-M-1) \leq i \leq 0{,}5 \bullet (L+M-1)$ und p gleich Nummer des Symbolblocks, vorzugsweise p=2, wobei M die Länge der zugehörigen selbstorthogonalen Sequenz konstanter Amplitude und L die Länge der zugehörigen gesendeten Trainingssequenz ist, und Erzeugung mindestens eines (M+1)-dimensionalen Vektors u;

b) differentielle Demodulation mindestens einer isolierten Trainingssequenz u und Erzeugung mindestens eines M-dimensionalen Vektors v;

c) zyklische Korrelation mindestens einer isolierten, differentiell demodulierten Trainingssequenz v der Länge M mit der ihr zugrunde liegenden selbstorthogonalen Sequenz $c_m$ konstanter Amplitude der Länge M und Erzeugung zumindest eines (L-M)-dimensionalen Vektors w;

d) Bestimmung des Wertes der gesuchten Frequenzabweichung durch Ermittlung des Indexes $k_{max}$ des betragsgrößten Elements zumindest eines Vektors w.

**11.** Verfahren nach Anspruch 10, dadurch gekennzeichnet, daß die Elemente des Vektors u gemäß der Beziehung

$$u_k = r_{k+k0+0{,}5(L-M-1)}$$

mit

$$0 \leq k \leq M$$

bestimmt werden.

**12.** Verfahren nach Anspruch 11, dadurch gekennzeichnet, daß die Elemente des Vektors v gemäß der Beziehung

$$v_k = u_{k+1} \bullet u_k^*$$

mit

$$0 \leq k \leq M$$

bestimmt werden mit $u_k^*$ konjugiert komplex zu $u_k$.

**13.** Verfahren nach Anspruch 12, dadurch gekennzeichnet, daß die Elemente des Vektors w gemäß der Beziehung

$$w_k = \sum_{m=0}^{M-1} v_m c_{(m-k)modM}^*$$

mit

$$-K \leq k \leq K = \frac{L-M-1}{2}$$

bestimmt werden mit $c_{(m-k)}^*$ konjugiert komplex zu $c_{(m-k)}$.

**14.** Verfahren nach einem der Ansprüche 8 bis 13, dadurch gekennzeichnet, daß zur Erhöhung der Genauigkeit der Messung der Trägerfrequenzablage zwischen Sender und Empfänger folgende Verfahrensschritte nach der Ermittlung des Indexes $k_{max}$ des betragsgrößten Elements des zumindest einen Vektors w durchgeführt werden:

a) Erzeugung mindestens eines (M+2)-dimensionalen Vektors u' mit den Elementen $u_k'$ aus der mindestens einen empfangenen und isolierten Trainingssequenz gemäß der Beziehung

$$u_k' = r_{k+k0+kmax+0,5(L-M-1)}$$

mit

$$0 \leq k \leq M+1;$$

b) modifizierte differentielle Demodulation zumindest einer isolierten Trainingssequenz u' und Erzeugung mindestens eines M-dimensionalen Vektors v' gemäß der Beziehung

$$v_k' = u_{k+1}' \bullet u_{k+1}'^* + u_{k+2}' \bullet u_k'^*$$

mit

$$0 \leq k < M$$

und
$u_{k+1}'^*$ konjugiert komplex zu $u_{k+1}'$ sowie $u_k'^*$ konjugiert komplex zu $u_k'$;

c) reduzierte zyklische Korrelation mindestens einer isolierten, modifiziert differentiell demodulierten Trainingssequenz v' mit der ihr zugrunde liegenden selbstorthogonalen Sequenz $c_m$ konstanter Amplitude und Bestimmung von Werten B und C gemäß den Beziehungen

$$B = \sum_{m=0}^{M-1} v_m' \, c_m^*$$

$$C = \sum_{m=0}^{M-1} v_m' \, c_{(m+1)\bmod M}^*$$

mit $c_m^*$ konjugiert komplex zu $c_m$ und $c_{(m+1)}^*$ konjugiert komplex zu $c_{(m+1)}$.

d) Bestimmung des genaueren Wertes der gesuchten Frequenzabweichung unter Verwendung der ermittelten Werte für $k_{max}$, B und C.

15. Verfahren nach einem der Ansprüche 8 bis 14, dadurch gekennzeichnet, daß mehr als eine Trainingssequenz empfängerseitig bearbeitet wird und daß mehrere Vektoren $u_i$ und/oder mehrere Vektoren $v_i$ und/oder mehrere Vektoren $w_i$ jeweils aufsummiert werden.

16. Verfahren nach Anspruch 15, dadurch gekennzeichnet, daß die Vektoren $u_i$ und/oder die Vektoren $v_i$ und/oder die Vektoren $w_i$ unterschiedlich gewichtet aufsummiert werden.

17. Verfahren nach einem der Ansprüche 15 oder 16, dadurch gekennzeichnet, daß bei Testsignalen, die aus einer durch vier teilbaren Anzahl n von Trainingssequenzen aufgebaut sind, die aus einer einzigen selbstorthogonalen Sequenz $c_{0,i}$ konstanter Amplitude erzeugt werden gemäß der Beziehung

$$c_{l,i} = e^{j2\pi(l/n)}\, c_{0,i}\,; \qquad l = 0, 1, \ldots n\text{-}1$$

bereits nach der differentiellen Demodulation der isolierten Trainingssequenzen die zugehörigen Vektoren $u_i$ miteinander kombiniert werden gemäß der Beziehung

$$u = \sum_i \alpha_i u_i$$

mit $\alpha_i$ konjugiert komplex zu dem Faktor, mit dem die ursprüngliche, selbstorthogonale Sequenz konstanter Amplitude multipliziert wurde, um die der i-ten Trainingssequenz zugrunde liegende selbstorthogonale Sequenz konstanter Amplitude zu erzeugen.

18. Verfahren nach einem der Ansprüche 8 bis 17, dadurch gekennzeichnet, daß über das Testsignal die Kanalstoßantwort durch folgende Verfahrensschritte gemessen wird:

    a) das empfangene oder das empfangene und vorverarbeitete, mit der schnellen Fourier-Transformation FFT verarbeitete Testsignal $r_{p,k}$ wird mit dem konjugiert komplexen zum sendeseitig abgestrahlten Testsignal zugehörigen Symbolblock $S^*_{p,k}$ elementweise multipliziert und ein N-dimensionaler Vektor H erzeugt mit den Komponenten $H_k = r_{p,k} \cdot S^*_{p,k}$, der die Schätzung der Übertragungsfunktion des Kanals darstellt, mit p gleich Nummer des Symbolblocks, vorzugsweise p=2;
    b) auf dem Vektor H wird eine inverse schnelle Fourier-Transformation IFFT berechnet und der Vektor h erzeugt, der die Schätzung der Kanalstoßantwort darstellt.

19. Verfahren nach Anspruch 18, dadurch gekennzeichnet, daß das Resultat der Kanalstoßantwortmessung zur Feinsynchronisation verwendet wird.

20. Empfänger eines Mehrkanalübertragungssystems zur Durchführung des Verfahren nach einem der Ansprüche 8 bis 19, bei welchem Verfahren ein Sendesignal eines Vielkanalübertragungssystems empfangen oder empfangen und vorverarbeitet wird, das senderseitig nach dem Verfahren nach einem der Ansprüche 1 bis 7 erzeugt worden ist, wobei das Sendesignal mehrere Symbolblöcke enthält und in mindestens einem Symbolblock S ein Testsignal ausgesendet wird, das zumindest eine periodisch fortgesetzte, differentiell kodierte, selbstorthogonale Sequenz konstanter Amplitude enthält, bei welchem Verfahren empfangsseitig zur Messung der Trägerfrequenzablage zwischen Sender und Empfänger das empfangene Testsignal oder das empfangene und vorverarbeitete Testsignal zunächst einer schnellen Fourier-Transformation FFT unterworfen wird und anschließend mindestens eine im Testsignal enthaltene Trainingssequenz isoliert, differentiell demoduliert, mit der zumindest einen selbstorthogonalen Sequenz konstanter Amplitude zyklisch korreliert wird sowie der Index des betragsgrößten Elements zumindest eines aus der zyklischen Korrelation abgeleiteten Vektors bestimmt wird, dadurch gekennzeichnet,

-    daß der Empfänger zumindest eine Vorrichtung zur Berechnung der schnellen Fourier-Transformation FFT und einen dieser Vorrichtung ausgangsseitig nachgeschalteten Speicher für deren Ausgangswerte enthält;

-    daß dem Speicher ausgangsseitig mindestens eine Isolationsvorrichtung zur Isolation der mindestens einen im Testsignal enthaltenen Trainingssequenz nachgeschaltet ist,

-    daß der mindestens einen Isolationsvorrichtung ausgangsseitig mindestens eine Demodulationsvorrichtung zur differentiellen Demodulation der isolierten Trainingssequenz nachgeschaltet ist;

-    daß der mindestens einen Demodulationsvorrichtung ausgangsseitig mindestens eine Korrelationsvorrichtung zur Korrelation der isolierten und differentiell demodulierten Trainingssequenz nachgeschaltet ist.

21. Empfänger nach Anspruch 20, dadurch gekennzeichnet, daß bei einem Empfänger mit mindestens zwei Isolations- und Demodulationsvorrichtungen ein den Demodulationsvorrichtungen ausgangsseitig nachgeschalteter komplexer Vektoraddierer vorgesehen ist.

## Claims

1. Method for the production of a transmission signal containing several signal blocks for a multichannel transmission system, characterised thereby, that a test signal, which contains at least one periodically continued, differentially coded, self-orthogonal sequence of constant amplitude, is sent out in at least one symbol block S.

2. Method according to claim 1, characterised thereby, that at least one training sequence in the form of a contiguous portion of transmission symbols $S_{k0+i}$ of the length L, wherein i = 0 or 1 to (L-1) is produced in the symbol block S containing the training sequence by differentially coded, periodically continued, self-orthogonal sequences $x_i$ of constant amplitude being multiplied by a complex multiplier A and by the sequences $x_i$ being built up of self-orthogonal signals $c_i$ of constant amplitude of the length M < L, wherein

$$x_i = \begin{cases} 1 & \text{for } i = 0 \\ x_{i-1} c_{(i-1)\bmod M} & \text{for } 1 \leq i \leq L\text{-}1. \end{cases}$$

3. Method according to claim 2, characterised thereby, that the test signal is built up of a number n, which is divisible by four, of training sequences which are produced from a single self-orthogonal sequence $c_{0,i}$ of constant amplitude in such a manner that n self-orthogonal sequences $c_{l,i}$ of constant amplitude, wherein l = 0 or 1 to (n-1), are initially computed from it and then used for the build-up of the training sequences, wherein

$$c_{l,i} = e^{j2\pi(1/n)} c_{0,i}.$$

4. Method according to one of the preceding claims, characterised thereby, that the test signal is repeated regularly.

5. Method according to one of the preceding claims, characterised thereby, that the transmitted signal displays a frame structure and that each frame contains a test signal.

6. Method according to claim 5, characterised thereby, that within a frame, the test signal is contained in the second signal block $S_2$.

7. Method according to one of the preceding claims, characterised thereby, that a differential modulation process is used between neighbouring symbol blocks and that the test signal is used as phase reference symbol.

8. Method for the synchronisation of a receiver of a multichannel transmission system to the transmitter of the system by means of transmitted signals, which are transmitted by the transmitter and contain several signal blocks, produced by the method according to one of the preceding claims, characterised thereby, that the test signal, which contains at least one periodically continued, differentially coded, self-orthogonal sequence of constant amplitude and is contained in at least one symbol block S of the transmitted signal received by the receiver, is initially identified and subsequently evaluated in that at least one training sequence contained in the test signal is isolated, differentially demodulated and cyclically correlated with the at least one self-orthogonal sequence of constant amplitude and subsequently

   - the carrier frequency deviation between transmitter and receiver and/or
   - the synchronisation error between transmitter and receiver and/or
   - the transient response of the transmission channel between transmitter and receiver

   is/are ascertained with the aid of the correlation result and the synchronisation of the receiver to the transmitter is performed with the aid of the ascertained carrier frequency deviation and/or the ascertained synchronisation error and/or the ascertained transient response of the transmission channel.

9. Method according to claim 8, characterised thereby, that in the case of the multichannel transmission process, a differential demodulation process is used between neighbouring symbol blocks and the test signal is used as a phase reference symbol for initialisation of the differential demodulation process.

**10.** Method according to one of the claims 8 and 9, characterised thereby, that for the measurement of the carrier frequency deviation between transmitter and receiver, the following method steps are performed on the received test signal or the received and preliminarily processed test signal after performance of a fast Fourier transformation FFT:

a) isolation of the at least one received training sequence in the form of a training sequence $r_{p,k0+i}$ of the length M + 1, wherein $0.5 \cdot (L-M-1) \le i \le 0.5 \cdot (L+M-1)$ and p is equal to the number of the symbol block, preferably p = 2, wherein M is the length of the associated self-orthogonal sequence of constant amplitude and L is the length of the associated transmitted training sequence and production of at least one (M+1)-dimensional vector u,

b) differential demodulation of at least one isolated training sequence u and production of at least one M-dimensional vector v,

c) cyclical correlation of at least one isolated, differentially demodulated training sequence v of the length M with the self-orthogonal sequence $c_m$ forming the basis thereof and being of constant amplitude of the length M and production of at least one (L-M)-dimensional vector w and

d) determination of the value of the sought frequency deviation by ascertaining the index $k_{max}$ of the element of greatest magnitude of at least one vector w.

**11.** Method according to claim 10, characterised thereby, that the elements of the vector u are determined according to the relationship

$$u_k = r_{k+k0+0.5(L-M-1)},$$

wherein $0 \le k \le M$.

**12.** Method according to claim 11, characterised thereby, that the elements of the vector v are determined according to the relationship

$$v_k = u_{k+1} \cdot u_k^*,$$

wherein $0 \le k < M$ and $u_k^*$ is conjugate complex to $u_k$.

**13.** Method according to claim 12, characterised thereby, that the elements of the vector w are determined according to the relationship

$$w_k = \sum_{m=0}^{M-1} v_m c_{(m-k)modM}^*$$

wherein $-K \le k \le K = \frac{L-M-1}{2}$ and $c_{(m-k)}^*$ is conjugate complex to $c_{(m-k)}$.

**14.** Method according to one of the claims 8 to 13, characterised thereby, that to increase the accuracy of the measurement of the carrier frequency deviation between transmitter and receiver, the following method steps are performed after the ascertaining of the index $k_{max}$ of the element of greatest magnitude of the at least one vector w:

a) production of at least one (M+2)-dimension vector u' with the elements $u_k'$ from the at least one received and isolated training sequence according to the relationship

$$u_k' = r_{k+k0+kmax+0.5(L-M-1)}$$

wherein $0 \le k \le M+1$,

b) modified differential demodulation of at least one isolated training sequence u' and production of at least one M-dimensional vector v' according to the relationship

$$v_k' = u_{k+1}' \cdot u_{k+1}'^* + u_{k+2}' \cdot u_k'^*,$$

wherein

$$0 \leq k < M$$

and $u_{k+1}'^*$ is conjugate complex to $u_{k+1}'$ as well as $u_k'^*$ is conjugate complex to $u_k'$,

c) reduced cyclical correlation of at least one isolated and modifiedly differentially demodulated training sequence v' with the self-orthogonal sequence $c_m$ forming the basis thereof and being of constant amplitude and determination of values B and C according to the relationships

$$B = \sum_{m=0}^{M-1} v_m' c_m^*$$

and

$$C = \sum_{m=0}^{M-1} v_m' c_{(m+1)\mathrm{mod}M}^*,$$

wherein $c_m^*$ is conjugate complex to $c_m$ and $c_{(m+1)}^*$ is conjugate complex to $c_{(m+1)}$ and

d) determination of the more exact value of the sought frequency deviation with the use of the ascertained values for $k_{max}$, B and C.

15. Method according to one of the claims 8 to 14, characterised thereby, that more than one training sequence is processed at the receiver end and that several vectors $u_i$ and/or several vectors $v_i$ and/or several vectors $w_i$ are added up each time.

16. Method according to claim 15, characterised thereby, that the vectors $u_i$ and/or the vectors $v_i$ and/or the vectors $w_i$ are added differently weighted.

17. Method according to one of the claims 15 and 16, characterised thereby, that in the case of test signals, which are built up out of a number n, which is divisible by four, of training sequences which are produced from a single self-orthogonal sequence $c_{0,i}$ of constant amplitude according to the relationship

$$c_{1,i} = e^{j2\pi(1/n)} c_{0,i},$$

wherein $I = 0$ or 1 to $(n-1)$ the associated vectors $u_i$ are already after the differential demodulation of the isolated training sequences combined one with the other according to the relationship

$$u = \sum_i \alpha_i u_i,$$

wherein $\alpha_i$ is conjugate complex to the factor by which the original self-orthogonal sequence of constant amplitude was modulated in order to produce the self-orthogonal sequence which is of constant amplitude and forms the basis of the $i^{th}$ training sequence.

18. Method according to one of the claims 8 to 17, characterised thereby, that the channel transient response is measured by way of the test signal by the following method steps:

    a) the received test signal or the received and preliminarily processed test signal $r_{p,k}$, processed by the fast Fourier transformation FFT, is multiplied element by element by the conjugate complex symbol block $s_{p,k}^{*}$ belonging to the test signal radiated from the transmitter end and an N - dimensional vector H with the components $H_k = r_{p,k} \cdot S_{p,k}^{*}$ is produced, which represents the estimate of the transfer function of the channel, wherein p is equal to the number of the symbol block, p preferably being equal to 2, and

    b) an inverse fast Fourier transformation IFFT is computed on the vector H and the vector h is produced, which represents the estimate of the channel transient response.

19. Method according to claim 18, characterised thereby, that the result of the channel transient response measurement is used for fine synchronisation.

20. Receiver of a multichannel transmission system for the performance of the method according to one of the claims 8 to 19, in which method a transmitted signal of a multichannel transmission system is received or is received and preliminarily processed, which signal has been produced at the transmitter end by the method according to one of the claims 1 to 7, wherein the transmitted signal contains several symbol blocks and in which a test signal, which contains at least one periodically continued, differentially coded, self-orthogonal sequence of constant amplitude, is sent out in at least one symbol block S. in which method the received test signal or the received and preliminarily processed test signal is initially subjected at the receiving end to a fast Fourier transformation FFT for the measurement of the carrier frequency deviation between transmitter and receiver and at least one training sequence contained in the test signal is subsequently isolated, differentially demodulated and cyclically correlated with the at least one self-orthogonal sequence of constant amplitude as well as the index of the element of greatest magnitude of at least one vector derived from the cyclical correlation is ascertained, characterised thereby, that

- the receiver contains at least one device for the computation of the fast Fourier transformation FFT and a storage device, which is connected behind this device at the output, for its output values,
- at least one isolating device for the isolation of the at least one training sequence contained in the test signal is connected behind the storage device at the output end,
- at least one demodulating device for the differential demodulation of the isolated training sequence is connected behind the at least one isolating device at the output end and
- at least one correlating device for the correlation of the isolated and differentially demodulated training sequence is connected behind the at least one demodulating device at the output end.

21. Receiver according to claim 20, characterised thereby, that in the case of a receiver with at least two isolating and demodulating devices, a complex vector adder is provided, which is connected behind the demodulating devices at the output end.

**Revendications**

1. Procédé de génération d'un signal d'émission contenant plusieurs blocs de symboles pour un système de transmission à canaux multiples, caractérisé en ce que, dans au moins un bloc de symbole S, est émis un signal de test, qui contient au moins une amplitude constante de séquence auto-orthogonale codée différentiellement, prolongée de façon périodique.

2. Procédé selon la revendication 1, caractérisé en ce que, dans le bloc de symbole S contenant le signal de test, est générée au moins une séquence d'entraînement sous la forme d'un tronçon associé de symboles d'émission $S_{k0+i}$ de longueur L, avec $i = 0, 1,...,L-1$, en ce que des séquences $x_i$ auto-orthogonales, prolongées périodiquement, codées différentiellement, d'amplitude constante, sont multipliées par un multiplicateur complexe A et en ce que les séquences $x_i$ sont constituées de séquences auto-orthogonales ci d'amplitude constante de longueur $M < L$ dans lesquelles s'applique

$$x_i = \begin{cases} 1 & \text{pour } i = 0 \\ x_{i-1} c_{(i-1) \bmod M} & \text{pour } 1 \leq i \leq L-1 \end{cases}$$

3. Procédé selon la revendication 2, caractérisé en ce que le signal de test est constitué d'un nombre divisible par quatre n de séquences d'entraînement, qui sont générées à partir d'une unique séquence auto-orthogonale $c_{0,i}$ d'amplitude constante, de telle sorte qu'à partir de celle-ci, tout d'abord n séquences auto-orthogonales $c_{l,i}$ d'amplitude constante avec $l = 0, 1,...n-1$ sont calculées, qui sont ensuite utilisées pour constituer les séquences d'entraînement, dans lesquelles s'applique

$$c_{1,i} = e^{j2\pi(1/n)} c_{0,i}$$

4. Procédé selon l'une quelconque des revendications précédentes, caractérisé en ce que le signal de test est répété de façon régulière.

5. Procédé selon l'une quelconque des revendications précédentes, caractérisé en ce que le signal d'émission présente une structure de trame et en ce que chaque trame contient un signal de test.

6. Procédé selon la revendication 5, caractérisé en ce qu'à l'intérieur d'une trame, le signal de test est contenu dans le second bloc de symbole $S_2$.

7. Procédé selon l'une quelconque des revendications précédentes, caractérisé en ce qu'un procédé de modulation différentielle est effectué entre des blocs de symbole adjacents et en ce que le signal de test est utilisé en tant que symbole de référence de phase.

8. Procédé de synchronisation d'un récepteur d'un système de transmission à canaux multiples sur l'émetteur du système au moyen de signaux d'émission émis par l'émetteur et contenant plusieurs blocs de symbole, générés à l'aide du procédé selon l'une quelconque des revendications précédentes, caractérisé en ce que le signal de test contenu dans au moins un bloc de symbole S du signal d'émission reçu par l'émetteur et au moins une séquence auto-orthogonale, codée différentiellement, prolongée de façon périodique, d'amplitude constante est identifié tout d'abord dans le récepteur et ensuite est évalué, dans lequel au moins une séquence d'entraînement contenue dans le signal de test est isolée, démodulée différentiellement, corrélée cycliquement avec au moins une séquence auto-orthogonale d'amplitude constante et ensuite à l'aide du résultat de la corrélation

- l'écart de fréquence porteuse entre émetteur et récepteur et/ou
- le défaut de synchronisation entre émetteur et récepteur et/ou
- la réponse impulsionnelle du canal de transmission entre émetteur et récepteur

est(sont) constatés, et à l'aide de la dérive de la fréquence porteuse constatée et/ou du défaut de synchronisation constaté et/ou de la réponse impulsionnelle constatée du canal de transmission, la synchronisation du récepteur est transmise à l'émetteur.

9. Procédé selon la revendication 8, caractérisé en ce que, dans le cas du procédé de transmission à canaux multiples, un procédé de démodulation différentielle entre des blocs de symbole adjacents est effectué, et en ce que le signal de test est utilisé en tant que symbole de référence de phase en vue de l'initialisation du procédé de démodulation différentielle.

10. Procédé selon l'une des revendications 8 ou 9, caractérisé en ce qu'en vue de la mesure de la dérive de la fréquence porteuse entre l'émetteur et le récepteur, les étapes de procédé suivantes sont effectuées sur le signal de test reçu et prétraité après réalisation d'une transformation de Fourier rapide FFT :

a) Isolement d'au moins une séquence d'entraînement reçue sous la forme d'une séquence d'entraînement $r_{p,k0+i}$ de longueur M+1 avec $0,5.(L-M-1) \leq i \leq 0,5.(L+M-1)$ et p un numéro égal du bloc de symbole, de préférence p = 2, M étant la longueur de la séquence auto-orthogonale associée d'amplitude constante et L la longueur de la séquence d'entraînement émise associée, et génération d'au moins un vecteur à (M+1) dimensions u ;

b) Démodulation différentielle d'au moins une séquence d'entraînement isolée u et génération d'au moins un d'entraînement isolée u et génération d'au moins un vecteur à M dimensions v ;

c) Corrélation cyclique entre une séquence d'entraînement démodulée différentiellement isolée v de longueur M avec sa séquence auto-orthogonale se trouvant à la base de celle-ci $c_m$ d'amplitude constante de longueur M et génération au moins d'un vecteur à (L-M) dimensions w ;

d) Détermination de la valeur de l'écart de fréquence recherché par détection de l'indice $k_{max}$ de l'élément maximal d'au moins un vecteur w.

**11.** Procédé selon la revendication 10, caractérisé en ce que les éléments du vecteur u sont déterminés selon la relation

$$u_k = r_{k+k0+à,5(L-M-1)}$$

avec

$$0 \leq k \leq M.$$

**12.** Procédé selon la revendication 11, caractérisé en ce que les éléments du vecteur v sont déterminés selon la relation

$$v_k = u_{k+1} \bullet u_k^*$$

avec

$$0 \leq k \leq M$$

$u_k^*$ étant le conjugué complexe de $u_k$.

**13.** Procédé selon la revendication 12, caractérisé en ce que les éléments du vecteur w sont déterminés selon la relation

$$w_k = \sum_{m=0}^{M-1} v_m c_{(m-k) \bmod M}^*$$

avec

$$-K \leq k \leq K = \frac{L-M-1}{2}$$

$C_{(m-k)}^*$ étant le conjugué complexe de $c_{(m-k)}$.

**14.** Procédé selon l'une quelconque des revendications 8 à 13, caractérisé en ce qu'en vue de l'accroissement de la précision de la mesure de la dérive de la fréquence porteuse entre émetteur et récepteur, les étapes de procédé suivantes sont effectuées après la détection de l'indice $k_{max}$ de l'élément le plus grand d'au moins un vecteur w :

a) génération d'au moins un vecteur à (M+2) dimensions u' avec l'élément $u_k'$ à partir d'au moins une séquence d'entraînement reçue et isolée selon la relation

$$u_k' = r_{k+k0=K\ max+0,5(L-M-1)}$$

avec

$$0 \leq k \leq M+1 \; ;$$

b) démodulation différentielle modifiée d'au moins une séquence d'entraînement isolée u' et génération d'au moins un vecteur à M dimensions v' selon la relation

$$v_k^{'} = u_{k+1}^{'} \bullet u_{k+1}^{'*} + u_{k+2}^{'} \bullet u_{k}^{'*}$$

avec

$$0 \leq k < M$$

et
$u_{k+1}^{'*}$ étant le conjugué complexe de $u_{k+1}^{'}$ ainsi que $u_{k}^{'*}$ étant le conjugué complexe de $u_{k}^{'}$ ;
c) corrélation cyclique réduite d'au moins une séquence d'entraînement démodulée différentiellement modifiée isolée v' avec la séquence auto-orthogonale se trouvant à sa base $c_m$ d'amplitude constante et détermination de valeurs B et C selon les relations

$$B = \sum_{m=0}^{M-1} v_m^{'} c_m^{*}$$

$$C = \sum_{m=0}^{M-1} v_m^{'} c_{(m+1) \bmod M}^{*}$$

$c_m^{*}$ étant le conjugué complexe de $c_m$ et $c_{(m+1)}^{*}$ étant le conjugué complexe de $c_{(m+1)}$ ;
d) détermination de la valeur précise de l'écart de fréquence recherché par utilisation des valeurs détectées pour $k_{max}$, B et C.

15. Procédé selon l'une quelconque des revendications 8 à 14, caractérisé en ce que plus d'une séquence d'entraînement est traitée côté récepteur et en ce que plusieurs vecteurs $u_i$ et/ou plusieurs vecteurs $v_i$ et/ou plusieurs vecteurs $w_i$ sont respectivement sommés.

16. Procédé selon la revendication 15, caractérisé en ce que les vecteurs $u_i$ et/ou les vecteurs $v_i$ et/ou les vecteurs $w_i$ sont sommés de façon pondérée différemment.

17. Procédé selon l'une des revendications 15 ou 16, caractérisé en ce que, dans le cas de signaux de test, qui sont constitués d'un nombre divisible par quatre n de séquences d'entraînement, qui sont générés à partir d'une unique séquence auto-orthogonale $c_{0,i}$ d'amplitude constante selon la relation

$$c_{l,i} = e^{j2\pi(l/n)} c_{0,i} \; ; \qquad l = 0,1,...n-1$$

après la démodulation différentielle des séquences d'entraînement isolées, les vecteurs associés $u_i$ sont combinés entre eux selon la relation

$$u = \sum_i \alpha_i u_i$$

$\alpha_i$ étant le conjugué complexe du facteur par lequel la séquence auto-orthogonale initiale d'amplitude constante, a été multipliée, afin de générer la séquence auto-orthogonale d'amplitude constante se trouvant à la base de la i-ème séquence d'entraînement.

**18.** Procédé selon l'une quelconque des revendications 8 à 17, caractérisé en ce que, par l'intermédiaire du signal de test, la réponse impulsionnelle du canal est mesurée par les opérations de procédé suivantes :

a) le signal de test reçu ou le signal de test reçu et prétraité, traité par la transformation de Fourier rapide FFT $r_{p,k}$ est multiplié élément par élément avec le bloc de symbole $S^*_{p,k}$ associé avec le signal de test conjugué complexe rayonné côté émission et un vecteur à N dimensions H généré avec les composantes $H_k = r_{p,k} \bullet S^*_{p,k}$, qui représente l'estimation de la fonction de transmission du canal, avec un numéro égal p du bloc de symboles, de préférence p = 2 ;
b) sur le vecteur H, est calculée une transformation de Fourier rapide inverse IFFT et le vecteur h généré, qui représente l'estimation de la réponse impulsionnelle du canal.

**19.** Procédé selon la revendication 18, caractérisé en ce que le résultat de la mesure de la réponse impulsionnelle du canal est utilisé en vue de la synchronisation fine.

**20.** Récepteur d'un système de transmission à canaux multiples en vue de la mise en oeuvre du procédé selon l'une quelconque des revendications 8 à 19, procédé selon lequel un signal d'émission d'un signal de transmission à canaux multiples est reçu ou reçu et prétraité, qui a été généré côté émission selon le procédé selon l'une des revendications 1 à 7, le signal d'émission contenant plusieurs blocs de symbole et dans au moins un bloc de symbole S est émis un signal de test, qui contient au moins une séquence auto-orthogonale, codée différentiellement, prolongée périodiquement, d'amplitude constante, procédé selon lequel, côté réception, en vue de la mesure de la dérive de fréquence porteuse entre émetteur et récepteur, le signal de test reçu ou le signal de test reçu et prétraité est soumis tout d'abord à une transformation de Fourier rapide FFT, et ensuite au moins une séquence d'entraînement contenue dans le signal de test est isolée, démodulée différentiellement, est corrélée cycliquement avec au moins une séquence auto-orthogonale d'amplitude constante, et l'indice de l'élément le plus important au moins d'un vecteur prélevé de la corrélation cyclique, caractérisé

-  en ce que le récepteur contient au moins un dispositif en vue du calcul de la transformation de Fourier rapide FFT et une mémoire disposée en aval côté sortie de ce dispositif pour les valeurs de sortie de celui-ci ;
-  en ce qu'en aval de la mémoire côté sortie, est disposé au moins un dispositif d'isolement en vue de l'isolement d'au moins une séquence d'entraînement contenue dans le signal de test ;
-  en ce qu'en aval d'au moins un dispositif d'isolement, est disposé, côté sortie, au moins un dispositif de démodulation en vue de la démodulation différentielle de la séquence d'entraînement isolée ;
-  en ce qu'en aval d'au moins un dispositif de démodulation, est disposé, côté sortie, au moins un dispositif de corrélation en vue de la corrélation de la séquence d'entraînement isolée et démodulée différentiellement.

**21.** Récepteur selon la revendication 20, caractérisé en ce que, dans le cas d'un récepteur avec au moins deux dispositifs d'isolement et de démodulation, est prévu un additionneur de vecteurs complexe disposé en aval côté sortie des dispositifs de démodulation.

FIG. 1

FIG. 2

25

FIG. 3

FIG. 4

FIG. 5

FIG. 6

FIG. 7

FIG. 8

$r_0$ — $H_0$ — $h_0$

$K_{sync}$

92

$r_{N-1}$ — $H_{N-1}$ — $h_{N-1}$

90    91

FIG. 9

FIG. 10

FIG. 11

223

224

231

232

/✓ 23

233

234

235

236

237

238

230$_r$

230$_j$

FIG. 12

FIG. 13

FIG. 14a

FIG. 14b

FIG. 15